(19) Europäisches Patentamt
European Patent Office
Office européen des brevets

(11) **EP 3 472 736 B1**

(12) **FASCICULE DE BREVET EUROPEEN**

(45) Date de publication et mention de la délivrance du brevet:
**19.05.2021 Bulletin 2021/20**

(21) Numéro de dépôt: **17742480.1**

(22) Date de dépôt: **20.06.2017**

(51) Int Cl.:
*G06F 30/15* (2020.01)      *G06F 30/20* (2020.01)
*G06F 30/23* (2020.01)      *G01N 3/32* (2006.01)

(86) Numéro de dépôt international:
**PCT/FR2017/051633**

(87) Numéro de publication internationale:
**WO 2017/220923 (28.12.2017 Gazette 2017/52)**

(54) **PROCÉDÉ D'ESTIMATION DU FACTEUR D'INTENSITÉ DES CONTRAINTES ET PROCÉDÉ DE CALCUL DE DURÉE DE VIE ASSOCIÉ**

VERFAHREN ZUR SCHÄTZUNG VON STRESSINTENSITÄTSFAKTOREN UND VERFAHREN ZUR BERECHNUNG DER ZUGEHÖRIGEN LEBENSDAUER

METHOD FOR ESTIMATING STRESS INTENSITY FACTORS AND METHOD FOR CALCULATING ASSOCIATED SERVICE LIFE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.06.2016 FR 1655705**

(43) Date de publication de la demande:
**24.04.2019 Bulletin 2019/17**

(73) Titulaire: **Safran Aircraft Engines
75015 Paris (FR)**

(72) Inventeurs:
• **DE MOURA PINHO, Raul Fernando
77550 Moissy-Crayamel (FR)**
• **SORIA, Didier José Diego
77550 Moissy-Crayamel (FR)**

(74) Mandataire: **Regimbeau
20, rue de Chazelles
75847 Paris Cedex 17 (FR)**

(56) Documents cités:
• X B LIN ET AL: "Finite element modelling of fatigue crack growth of surface cracked plates Part III: Stress intensity factor and fatigue crack growth life", ENGINEERING FRACTURE MECHANICS, vol. 63, no. 5, 1999, pages 541-556, XP055364506, AMSTERDAM, NL ISSN: 0013-7944, DOI: 10.1016/S0013-7944(99)00042-9
• Lie Zhang: "Fatigue Life Calculation" In: "Failure Assessment of Thin-walled Structures with Particular Reference to Pipelines", 2010, WIT Press, XP055364501, ISBN: 978-1-84564-420-8 page 51, figure 42
• H SCHUETTE ET AL: "On a geometrically nonlinear damage model based on a multiplicative decomposition of the deformation gradient and the propagation of microcracks", JOURNAL OF THE MECHANICS AND PHYSICS OF SOLIDS, vol. 50, 2002, pages 827-853, XP055364157,

**Description**

DOMAINE TECHNIQUE GENERAL

L'invention concerne l'analyse de propagation de fissure dans des pièces mécaniques. Ces pièces sont essentiellement destinées à des aéronefs, mais peuvent être n'importe quel composant mécanique. La propagation est définie dans un cadre de propagation par fatigue, avec une série de cycles de chargement.

En particulier, l'invention concerne les méthodes et systèmes de simulation, de détermination et d'interpolation de facteur d'intensité des contraintes (appelé FIC par la suite) d'une pièce modélisée numériquement que l'on souhaite analyser. L'invention concerne aussi les méthodes et systèmes de calcul de durée de vie de la pièce à analyser.

Le FIC se décompose en trois grandeurs, notées KI, KII et KIII, correspondant aux modes respectivement d'ouverture de la fissure, de cisaillement plan et de cisaillement anti-plan.

La présente description sera faite pour KI mais reste applicable aux autres grandeurs.

Les méthodes numériques de propagation de fissure sont performantes. Par exemple, les méthodes des éléments finis étendus (XFEM) ou de fissuration conforme permettent la prévision des trajets de propagation de fissure de manière fiable ainsi que le calcul des FIC le long d'un front de fissure.

Cependant, le calcul de la durée de vie en propagation de fissure n'est généralement pas intégré dans les codes du commerce ou incompatible avec les exigences industrielles.

C'est pourquoi il est usuel que les industries de l'aéronautique développent leur propre code de calcul de la durée de vie dont le fonctionnement se fonde sur des post-traitements particuliers des résultats issus des simulations numériques de propagation de fissure.

Pour une dimension de fissure donnée et en un point donné du front de fissure, le FIC est la grandeur caractérisant l'intensité du chargement au voisinage de la pointe de fissure. Selon l'amplitude de cette grandeur au cours d'un cycle de chargement de fatigue, la fissure va se propager plus ou moins vite.

C'est le rôle des simulations numériques de propagation de fissure de fournir les valeurs du FIC le long du front de fissure et pour différentes longueurs de fissure.

A partir de cette liste de valeurs, les codes de calculs de la durée de vie doivent être en mesure de prédire la durée de vie en propagation de fissure.

Néanmoins, pour des raisons de capacité de calcul, les pas de propagation, c'est-à-dire d'itération du calcul des simulations numériques, ne sont pas pris trop petits, ce qui signifie que toutes les longueurs de fissure ne sont pas simulées.

Afin de mener à bien le calcul de durée de vie, les FIC doivent donc être interpolés entre les pas de propagation simulés. Il est donc essentiel d'avoir une méthode d'interpolation efficace afin que les durées de vie prédites soient pertinentes.

ETAT DE L'ART

On rappelle que l'on se place dans le cadre d'une modélisation de fissure par fatigue, c'est-à-dire une modélisation de l'évolution d'une fissure lorsque plusieurs cycles de charge sont appliqués.

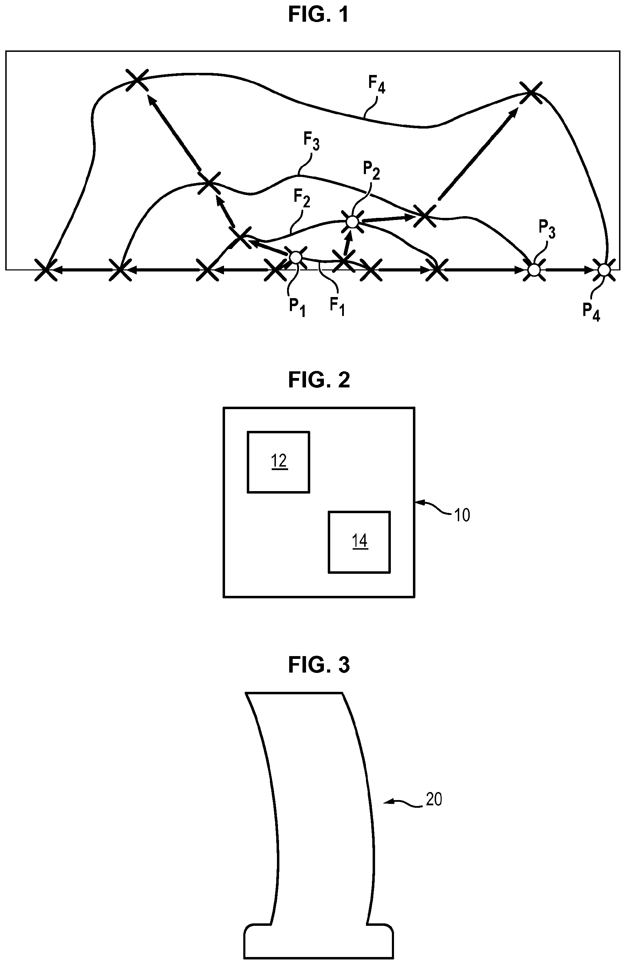

Les méthodes de fissuration 3D, généralement obtenues par éléments finis, permettent d'obtenir les FIC le long d'un front de fissure à chaque pas de propagation ainsi que les informations géométriques qui la caractérisent (coordonnées des nœuds du front de fissure et faces et nœuds associés à l'une des faces de la fissure). En pratique, seul le FIC maximum le long du front de fissure pour chaque pas de propagation (voir en **figure 1** l'unique point P1, P2, P3, P4 sur chacun des traits courbes qui représente chaque front de fissure F1, F2, F3, F4 à un pas de propagation différent) intervient dans le calcul de la durée de vie. Pour pouvoir utiliser ces valeurs de FIC, il est utile de les mettre en correspondance avec une longueur de fissure correspondante.

Par la suite, les points entre chaque valeur tabulée sont obtenus à l'aide d'une interpolation linéaire entre les points de la tabulation.

Il y a deux inconvénients majeurs concernant cette méthode d'interpolation des FIC.

Le premier concerne le fait que le FIC renseigné dans le formulaire est le FIC maximum le long du front de fissure pour chaque pas de propagation. En d'autres termes, ce n'est pas forcément le FIC correspondant au même point du front qui est renseigné (les points sur la **figure 1** concernent différents endroits du front de fissure). On ne tient ainsi pas compte, avec cette méthode, de la géométrie tridimensionnelle de la fissure et de son évolution au cours du temps qui impacte nécessairement l'évolution du FIC.

Le second inconvénient concerne le fait que cette méthode ne permet pas de vérifier si le pas de propagation est suffisamment fin. Il a été montré que si le pas de propagation est trop grossier, les durées de vie en propagation de fissure peuvent ne plus être conservatives.

Il y a en outre une dernière faiblesse à cette approche relative à la géométrie de la fissure qu'il faut considérer, qui peut être complexe (bifurcation par exemple). En effet, la fissure est une construction intrinsèquement tridimensionnelle et se pose le problème de la définition de la « longueur de la fissure ». Cela limite fortement l'applicabilité de cette méthode.

Il existe des méthodes théoriques pour calculer la propagation de fissures.

Par exemple, la méthode des fonctions de poids permet de calculer des facteurs d'intensité des contraintes FIC à partir du champ de contrainte de la structure non-fissurée et de la géométrie de fissure (références [1], [2] et [3] par exemple - les références sont données en fin de description). Néanmoins, cette méthode est limitée à des cas simples ce qui la rend inutilisable en règle générale.

Les méthodes dites « perturbatives » sont plus complexes mathématiquement parlant, mais permettent de déterminer semi-analytiquement le comportement en fissuration ainsi que la stabilité du front (voir référence [4]). Cependant, la majeure partie des développements ne s'applique que sous l'hypothèse de milieu au moins semi-infini. L'état de la technique est également connue de par la référence [5].

PRESENTATION DE L'INVENTION

L'invention propose ainsi un procédé d'estimation du facteur d'intensité des contraintes dans une pièce modélisée numériquement, dans le cadre d'une modélisation de propagation de fissure par fatigue, comprenant les étapes suivantes :

- (E2) : obtention, à partir d'une modélisation numérique de la pièce à analyser, d'une pluralité de valeurs simulées en différents points de la pièce à analyser,
  ladite pluralité de valeurs simulées comprenant, pour différents pas de propagation simulés d'une fissure tridimensionnelle qui apparait sur la modélisation numérique de la pièce, un ensemble des valeurs simulées du facteur d'intensité des contraintes en des points associés, la position de ces points, et des données relatives à la surface fissurée (coordonnées des nœuds et faces des éléments tridimensionnels définissant l'une des faces de la fissure, les faces des éléments pouvant être stockées sous la forme d'une table de connectivité),
- (E3) : détermination, pour chaque pas de propagation et pour l'ensemble de valeurs simulées pour celui-ci, d'une part d'une valeur convertie d'amplitude du facteur d'intensité des contraintes efficace global équivalent correspondant à celui d'une fissure plane à front droit et d'autre part d'une longueur convertie de la fissure équivalente considérée, lesdites valeurs converties étant déterminées par égalisation de l'énergie dissipée dans la fissure tridimensionnelle de la modélisation numérique et de l'énergie dissipée dans la fissure d'un modèle standard de fissure plane à front droit, les énergies étant elles-mêmes déterminées en fonction des facteurs d'intensité des contraintes,
- (E4) : Interpolation de valeurs converties d'amplitude de facteur d'intensité des contraintes efficace global équivalent entre deux longueurs de fissure converties (a) successives,
- (E5) : Stockage des valeurs converties d'amplitude de facteur d'intensité des contraintes efficace global équivalent ainsi interpolées avec les longueurs de fissure associées.

Ainsi, on se rapporte à un procédé global « thermodynamiquement » équivalent à celui d'une fissure plane à front droit. Une notion de longueur possédant un sens physique est générée, ce qui permet de s'affranchir des limitations citées précédemment.

Le procédé présenté est mis en œuvre par un système comprenant une unité de traitement de données.

L'invention concerne aussi les caractéristiques suivantes, prises seules ou en combinaison :

- l'étape d'interpolation met en œuvre une interpolation linéaire par morceaux,
- l'étape d'interpolation met en œuvre une interpolation par minimisation de l'énergie de courbure,
- l'étape d'interpolation comprend les sous-étapes suivantes :

  interpolation à l'aide d'une interpolation linéaire,
  interpolation à l'aide d'une interpolation par minimisation de l'énergie de courbure, les deux interpolations étant interchangeables,
  calcul d'au moins une grandeur représentative d'une différence de valeurs d'amplitude du facteur d'intensité des contraintes entre les deux interpolations, ladite différence étant calculée strictement entre deux valeurs de longueurs de la fissure correspondant à deux pas successifs,
  comparaison de ladite grandeur représentative de la différence avec un seuil prédéterminée,
  si la grandeur représentative de la différence est supérieure au seuil, génération d'une consigne d'instruction de calcul à partir de la simulation numérique de la pièce à analyser des valeurs du facteur d'intensité des contraintes (FIC) le long du nouveau front simulé et des valeurs de la position de la fissure, entre les deux pas successifs,

- le procédé comprend préalablement à l'étape d'obtention (E2), une étape de calcul (E1) mettant en œuvre la simulation par éléments finis (ou éléments finis étendus) à des pas successifs de l'évolution de la fissure dans la pièce à analyser, ladite simulation étant effectuée par l'unité de traitement,
- les données numériques récupérées à d'obtention (E2) des données sont obtenues au moyen d'une simulation par éléments finis ou d'une simulation par éléments finis étendus,
- pour l'étape de détermination (E3), le premier sous-ensemble de données permet de connaitre l'amplitude efficace du taux de restitution d'énergie ΔG par les relations suivantes :

$$G = \frac{1}{E^*} (K_I^2 + K_{II}^2) + \frac{1}{\mu} K_{III}^2$$

$E^*$ = E en contraintes planes
$E^*$ = $E/(1 - v^2)$ en déformations planes

$$\left(\Delta K_{eff}(s)\right)^2 = \Delta G_{eff}(s).E^*$$

Où $K_I$, $K_{II}$ et $K_{III}$ sont, respectivement, les coefficient de FIC correspondant aux modes d'ouverture de la fissure, de cisaillement dans le plan et de cisaillement anti-plan, $\Delta K_{eff}(s)$ est l'amplitude du facteur d'intensité des contraintes efficace, $\Delta G_{eff}$ est l'amplitude du taux de restitution d'énergie efficace, s est l'abscisse curviligne le long du front de fissure, E est le module de Young, $\mu$ est le module de cisaillement, $E^*$ est le module de Young équivalent, v est le coefficient de Poisson,
le deuxième sous-ensemble de données permet de connaitre l'incrément de surface fissuré par unité de longueur de front de fissure dSurf,
ces formulations permettent d'obtenir la valeur de l'énergie dissipée :

$$Energie\ dissipée = \int_{front\ de\ fissure} \Delta G_{eff}(s).dSurf(s).dl$$

dans lequel cette énergie dissipée est égalisée avec l'énergie dissipée de la fissure d'un modèle standard de fissure plane à front droit, s'exprimant sous la forme :

$$Energie\ dissipée^{glob} = \Delta G_{eff}^{glob}.dSurf^{glob}.L_{front}$$

Où la notation glob est relative à ce modèle standard, et $L_{front}$ est la longueur du front de fissure,
dans lequel, grâce à une modélisation par une loi de Paris avec les paramètres de fermeture de fissure d'Elber,
le lien entre dSurf$^{glob}$ et $\Delta G_{eff}^{glob}$ est effectué

$$\frac{dSurf^{glob}}{dN} = C.\left(\sqrt{\Delta G_{eff}^{glob}.E^*}\right)^n$$

Où C et n sont des coefficients de Paris,
dans lequel, en égalisant les deux énergies dissipées, on obtient

$$\Delta G_{eff}^{glob} = \left(\frac{\int_{front\ de\ fissure} \Delta G_{eff}(s).dSurf(s).dl}{C.(E^*)^n L_{front}}\right)^{\frac{1}{n+1}} = \left(\frac{Energie\ dissipée}{C.(E^*)^n L_{front}}\right)^{\frac{1}{n+1}}$$

dans lequel, au moyen des relations entre ΔGeff et ΔKeff, on détermine $\Delta K_{eff}^{glob}$ et dans lequel on détermine Surf$^{glob}$, c'est-à-dire la longueur a convertie de la fissure équivalente.

En particulier, le premier sous-ensemble de données contient les valeurs du facteur d'intensité des contraintes en des points associés sur le front de fissure et leur position respective associée, et le deuxième sous-ensemble de données contient les données relatives à la surface fissurée.

L'invention concerne également un procédé d'évaluation de la durée de vie d'une pièce modélisée numériquement, dans lequel on met en œuvre un calcul de la durée de vie de la pièce faisant intervenir les valeurs converties d'amplitude de facteur d'intensité des contraintes efficace global équivalent interpolées en fonction d'une longueur de fissure équivalente selon un procédé tel que décrit précédemment.

L'invention concerne également un système comprenant une unité de traitement comprenant des moyens de calcul et une mémoire, l'unité étant configurée pour mettre en œuvre un procédé d'estimation ou un procédé d'évaluation de durée de vie en propagation de fissure par fatigue tel que décrit précédemment.

L'invention concerne également un produit programme d'ordinateur configuré pour être mis en œuvre par un système tel que décrit précédemment, et comprenant des instructions pour provoquer la mise en œuvre d'un procédé d'estimation ou un procédé d'évaluation de durée de vie tel que décrit précédemment.

PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :

- La figure 1 illustre un front de fissure pour différents pas de propagation,
- La figure 2 illustre un système permettant de mettre en œuvre l'invention,
- La figure 3 illustre une pièce à analyser,
- La figure 4 illustre deux procédés et des modes de réalisation associés selon l'invention,
- La figure 5 illustre des points convertis en équivalence avec une fissure plane à front droit, à partir d'une fissure tridimensionnelle, selon une théorie d'équivalence énergique par analyse thermodynamique,
- La figure 6 illustre ces mêmes points avec deux méthodes d'interpolation : linéaire par morceaux et par minimisation de l'énergie de courbure,
- La figure 7 illustre l'évolution de l'interpolation polynomiale avec le degré du polynôme,
- La figure 8 illustre schématiquement une fissure plane à front droit,
- Les figures 9a à 9c illustrent des fonctions de forme 1D issues d'une généralisation des éléments finis et servant à calculer l'énergie de courbure,
- Les figures 10 à 10c illustrent un changement de représentation pour lisser les métriques.

DESCRIPTION DETAILLEE

En référence à la **figure 2,** on a représenté un système 10 d'interpolation de valeur de facteurs d'intensité des contrainte (FIC) K d'une pièce à analyser 20, qui est modélisée numériquement. Comme indiqué en introduction, le FIC K se décompose en trois données KI, KII, KIII. La description sera donnée pour KI uniquement.

La pièce à analyser 20 est une pièce destinée à l'aéronautique, pour laquelle la durée de vie doit pouvoir être estimée. La pièce 10 est typiquement une aube fan de compresseur ou de turbine, un disque moteur, une bride, une attache moteur, un carter telle qu'illustrée en **figure 3.** Cette liste est donnée à titre illustratif, puisque, pour la mise en œuvre du procédé, le type de pièce n'intervient cependant pas.

Le système 10 comprend une unité de traitement de données 12, par exemple un ordinateur ou un serveur, disposant de moyens de calcul 14 configurés pour mettre en œuvre un procédé qui sera décrit plus en détail ci-après et, disposant avantageusement, d'une mémoire 16. Les moyens de calcul 14 peuvent par exemple être un calculateur de type processeur, microprocesseur, microcontrôleur, etc. La mémoire 16 peut être par exemple un disque dur, une mémoire « *flash* », ou un espace de stockage délocalisé, de type « *cloud* ».

L'unité de traitement de données 12 peut également être adaptée pour mettre en œuvre des simulations numériques, telles qu'éléments finis, de la pièce à analyser 20. La simulation par éléments finis permet d'obtenir, pour chaque pas de simulation, des données relatives à ladite pièce et à la propagation de fissure.

En particulier, il est possible d'obtenir pour chaque pas de propagation, les valeurs du FIC en des points associés et la position de ces points, généralement le long du front de fissure. Les positions comprennent par exemple les coordonnées des nœuds du maillage définissant le front de fissure. Il est possible d'obtenir des données relatives à la surface fissurée : outre les coordonnées de nœuds, les faces des éléments tridimensionnels définissant une parmi les faces de la fissure. Ces données sont stockées sous la forme d'une table de connectivité, classiquement connues en éléments finis. D'autres données, telles que le maillage de la surface fissurée ainsi que du front peuvent aussi être obtenues.

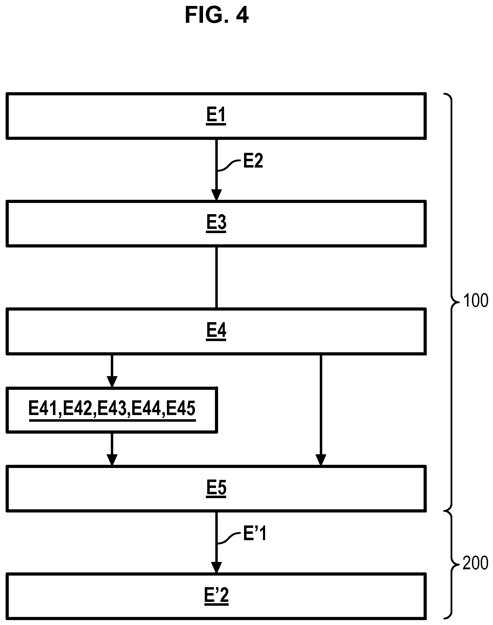

En référence à la **figure 4,** un procédé 100 d'interpolation des valeurs d'un FIC d'une fissure tridimensionnelle simulée par éléments finis va être décrit.

Ce procédé 100 est aussi avantageusement utilisé pour améliorer l'interpolation du FIC. Cela sera décrit par la suite.

Dans une première étape E1, une simulation numérique est effectuée sur la pièce à analyser 10. Cette simulation permet d'obtenir les données précitées.

Dans un mode de réalisation préférée, cette simulation est faite par éléments finis ou par éléments finis étendus.

Cette étape E1 est effectuée soit par l'unité de traitement 12 du système, soit par un autre système.

Dans les deux cas, une étape E2 de réception desdites données (générées durant l'étape E1) par l'unité de traitement 12 du système est mise en œuvre. Plus précisément, on définit pour chaque front de fissure simulé un premier sous-ensemble de données qui contiennent les valeurs du FIC en des points associés sur le front de fissure et leur position respective associée, et un deuxième sous-ensemble de données qui contient les données relatives à la surface fissuré (les coordonnées des nœuds définissant le front de fissure ainsi que le maillage surfacique d'une des faces de la fissure, par exemple la table de connectivité des faces des éléments tridimensionnels concernés) telles qu'elles ont été définies précédemment. Ayant une pluralité de fronts simulés à des pas différents, on obtient ainsi une pluralité de premiers et de deuxièmes sous-ensembles de données.

Il s'agit de la première étape du procédé d'interpolation à proprement parler, dans la mesure où l'étape de simulation E1 n'est pas nécessairement mise en œuvre expressément pour une interpolation ultérieure.

Dans l'étape E3, la problématique de la géométrie de la fissure en trois dimensions est ramenée à une problématique de fissure plane à front droit. La fissure plane à front droit est un modèle standard connu de l'homme de l'art. Pour cela, une équivalence thermodynamique fondée sur une égalité de l'énergie dissipée entre les deux modélisations est effectuée. Le fondement physique est expliqué ci-dessous.

Le premier principe de la thermodynamique, pour une transformation du front de fissure infinitésimale donne, exprimée en densité d'énergie par unité de longueur de front de fissure :

$$\underbrace{\mathrm{dW}_{el}^{i}}_{densité\ d'énergie\ interne} = \underbrace{\delta\mathrm{Q}}_{densité\ de\ chaleur} + \underbrace{\delta\mathrm{W}_{ext}}_{densité\ de\ travail\ des\ efforts\ extérieurs}$$

Le second principe de la thermodynamique permet d'exprimer l'irréversibilité de la transformation :

$$\mathrm{T.\,dS} = \delta\mathrm{Q} + \underbrace{\mathrm{G.\,dSurf}}_{densité\ d'énergie\ dissipée}$$

La densité d'énergie dissipée est toujours positive. Le terme dSurf représente l'incrément de surface fissurée par unité de longueur de front de fissure au cours de la transformation infinitésimale. Cette quantité est homogène à une longueur : il s'agit en quelque sorte d'un incrément de longueur de fissure au sens « thermodynamique » du terme. Il apparait ainsi une grandeur « physique » que l'on pourra considérer pour effectuer une interpolation qui présente un sens physique.

Les éléments précédents permettent de rendre le problème de fissuration tridimensionnel initial équivalent à un problème de propagation de fissure plane à front droit en élasticité plane. Pour plus de généralité, nous nous plaçons dans le cas de l'élasticité adaptée, c'est-à-dire que le matériau a déjà pu subir une déformation plastique initialement, mais la propagation de fissure se fait sous un chargement cyclique de fatigue en élasticité.

Le champ de température peut évoluer au cours du temps mais le champ de température ne varie pas spatialement. Par conséquent, à un cycle de fatigue est associée une température.

Une hypothèse de modélisation consiste à considérer que la loi de propagation de fissure est une loi de Paris avec correction d'Elber (références [6], [7]), donnée par l'équation suivante :

$$\frac{\mathrm{dSurf}}{dN} = \mathrm{C}(T).\left(\varDelta K.U(R,T)\right)^{n(T)} = \mathrm{C}(T).\left(\varDelta K_{eff}\right)^{n(T)}$$

avec $U(R, T) = a(T).R + b(T)$ avec $C(T)$ et $n(T)$ sont les coefficients de la loi de Paris et $a(T)$ et $b(T)$ sont les paramètres de la loi de fermeture de fissure d'Elber, $\Delta K$ est l'amplitude du FIC, qui permet de s'affranchir du rapport de charge, (c'est-à-dire du rapport R=Kmin/Kmax) et $\varDelta K_{eff}$ est l'amplitude efficace du FIC, qui prend en compte l'effet de fermeture de la fissure. Le lien entre $\Delta K$ et $\varDelta K_{eff}$ a été établi par Elber.

L'incrément de surface dSurf fissuré par cycle est maintenant relié à l'amplitude du facteur d'intensité de contrainte efficace $\varDelta K_{eff}$.

Il existe une relation entre K (ou $\varDelta K_{eff}$, par équivalence) et le taux de restitution d'énergie G (ou l'amplitude

dudit taux efficace $\Delta G_{eff}$ par équivalence), donné par les relations suivantes :

$$G = \frac{1}{E^*}\left(K_I^2 + K_{II}^2\right) + \frac{1}{\mu}\,K_{III}^2$$

$E^*$ = E en contraintes planes

$E^*$ = $E/(1 - v^2)$ en déformations planes

où E est le module de Young, $E^*$ est le module de Young équivalent, $\mu$ est le module de cisaillement, v est le coefficient de Poisson.

Le FIC est connu en chaque point du front de fissure et pour chaque pas de propagation à l'aide de la simulation numérique de l'étape E1 et récupéré à l'étape E2.

En remplaçant les valeurs par leur amplitude dans les relations précédentes, on obtient, par définition, une relation entre le taux de restitution d'énergie et l'amplitude du facteur d'intensité des contraintes efficaces (s étant l'abscisse curviligne le long du front de fissure) :

$$\left(\Delta K_{eff}(s)\right)^2 = \Delta G_{eff}(s).E^*$$

L'énergie dissipée au cours du processus de fissuration s'obtient par la relation suivante (en restant dans l'hypothèse de transformation infinitésimale, donc en ne considérant qu'un cycle de chargement) :

$$Energie\ dissip\acute{e}e = \int_{front\ de\ fissure} \Delta G_{eff}(s).dSurf(s).dl$$

Le dSurf est connu à l'aide des données relatives à la surface fissurée calculées par la simulation numérique à l'étape E1 et récupérées à l'étape E2.

En faisant le postulat d'une équivalence du problème de fissuration 3D avec un problème de fissuration plane à front droit, on peut égaliser les énergies dissipées et les longueurs de front de fissure. Par conséquent, il est légitime d'écrire :

$$Energie\ dissip\acute{e}e^{glob} = \Delta G_{eff}^{glob}.dSurf^{glob}.L_{front}$$

La notation « glob » signifie que la donnée est propre à la modélisation en fissuration plane à front droit.

La fissuration plane à front droit respecte elle aussi la loi de propagation de Paris. On obtient par conséquent que

$$\frac{dSurf^{glob}}{dN} = C.\left(\sqrt{\Delta G_{eff}^{glob}.E^*}\right)^n$$

En égalisant les deux énergies dissipées et en réécrivant l'équation, on obtient la relation suivante

$$\Delta G_{eff}^{glob} = \left(\frac{Energie\ dissip\acute{e}e}{C.(E^*)^n L_{front}}\right)^{\frac{1}{n+1}} = \left(\frac{\int_{front\ de\ fissure} \Delta G_{eff}(s).dSurf(s).dl}{C.(E^*)^n L_{front}}\right)^{\frac{1}{n+1}}$$

Or $dSurf^{glob}/dN$ = $dSurf^{glob}$ (car $dN$ = 1 ici, puisqu'on ne considère qu'un seul cycle) est homogène à une longueur de fissure. Par conséquent, son intégration au cours du temps entre le premier cycle et le dernier cycle permet d'obtenir une longueur de fissure équivalente $Surf^{glob}$, notée longueur a, au sens thermodynamique. On obtient bien une longueur qui a un sens physique.

La relation précédente établie entre $\Delta K_{eff}^{glob}$ et $\Delta G_{eff}^{glob}$ permet d'injecter l'amplitude du FIC efficace dans l'équation précédente.

On obtient ainsi une relation reliant l'amplitude du FIC efficace global équivalent dans la modélisation en fissure plane à front droit en fonction de la longueur de la fissure Surf$^{glob}$, c'est-à-dire la longueur a. Ces données-là pourront ensuite être interpolées.

Cette construction physique est valide en toute généralité. Cependant, elle nécessite de connaître toutes les informations du problème pour chaque cycle de chargement ce qui est généralement trop coûteux en termes de temps de calculs et d'espace mémoire pour la sauvegarde de l'intégralité des résultats (au moins un millier de cycle devraient être simulés). Les calculs par éléments finis se font souvent à pas de propagation maximal fixe le long du front de fissure, ou pré-intègrent sur un nombre de cycles donné (10, 100 ou 1000 par exemple). Cela revient à dé-raffiner la discrétisation en pas de propagation pour réduire le temps de calcul.

Par conséquent la loi de propagation est remplacée par :

$$\frac{\mathrm{dSurf}_{eq}^{glob}}{dN} = \mathrm{C}.\,coeff.\left(\sqrt{\Delta\mathrm{G}_{\mathrm{eff}}^{\mathrm{glob}}.\,\mathrm{E}^*}\right)^{\mathrm{n}} = \mathrm{C}_{eq}.\left(\sqrt{\Delta\mathrm{G}_{\mathrm{eff}}^{\mathrm{glob}}.\,\mathrm{E}^*}\right)^{\mathrm{n}_{eq}}$$

où *coeff* est le coefficient qui permet la pré-intégration de plusieurs cycles.

Cela revient à modifier les coefficients de la loi de Paris C et n par les coefficients $C_{eq}$ = *C.coeff* et $n_{eq}$ = *n*.

Le lien entre $\mathrm{dSurf}_{eq}^{glob}$ et dSurf$^{glob}$ est donc le suivant :

$$\mathrm{dSurf}_{eq}^{glob} = coeff.\,\mathrm{dSurf}^{\mathrm{glob}}$$

De plus, le terme *dsurf(s)* est remplacé par la surface incrémentée entre deux pas de propagation simulés $dSurf_{eq}(s)$ (donc non infinitésimale).

En conclusion, le raisonnement précédent s'applique approximativement en effectuant les remplacements précédents et la longueur de fissure équivalente se déduit toujours de la même manière.

Ainsi, dans l'étape E3, à partir de la pluralité de premiers et de deuxièmes sous-ensembles de données récupérées à l'étape E2, c'est-à-dire les données du FIC le long des différents fronts de fissures simulées à des pas différents et des données relatives aux surfaces fissurées, et au moyen de ce qui a été expliqué précédemment, on détermine l'amplitude efficace globale du FIC $\Delta\mathrm{K}_{eff}^{glob}$ et la longueur a de la fissure plane à front droit associée. Cette détermination est mise en oeuvre par l'unité de traitement 12.

Pour un front de fissure donné, les données du FIC simulées permettent de connaitre K (premier sous-ensemble de données) et au moyen des équations précédentes permettent de calculer le $\Delta\mathrm{K}_{eff}^{glob}$ et les données de la surface fissurée $dSurf_{eq}$ (deuxième sous-ensemble de données) permettent de calculer la longueur a. Du fait de la pluralité de données correspondant à chaque front, on obtient une pluralité de couple $(\mathrm{a},\ \Delta\mathrm{K}_{eff}^{glob}).$

L'équivalence obtenue peut aussi être appliquée à une fissure plane à front droit. La relation suivante montre que le système reste invariant :

$$\Delta\mathrm{G}_{eff}^{glob} = \left(\frac{\int_{front\ de\ fissure}\Delta\mathrm{G}_{eff}(s).\,dSurf_{eq}(s).\,\mathrm{dl}}{C_{eq}.\,(E^*)^{\mathrm{n}_{eq}}.\,L_{front}}\right)^{\frac{1}{\mathrm{n}_{eq}+1}}$$

$$= \left(\frac{\Delta\mathrm{G}_{eff}.\,C_{eq}.\left(\Delta\mathrm{G}_{eff}.\,E^*\right)^{\mathrm{n}_{eq}}}{C_{eq}.\,(E^*)^{\mathrm{n}_{eq}}}\right)^{\frac{1}{\mathrm{n}_{eq}+1}} = \Delta\mathrm{G}_{eff}$$

De cela découle le fait que les surfaces fissurées sont les mêmes, donc le système final est identique au problème initial. Ceci prouve la cohérence de la méthode fondée sur une analyse thermodynamique du problème.

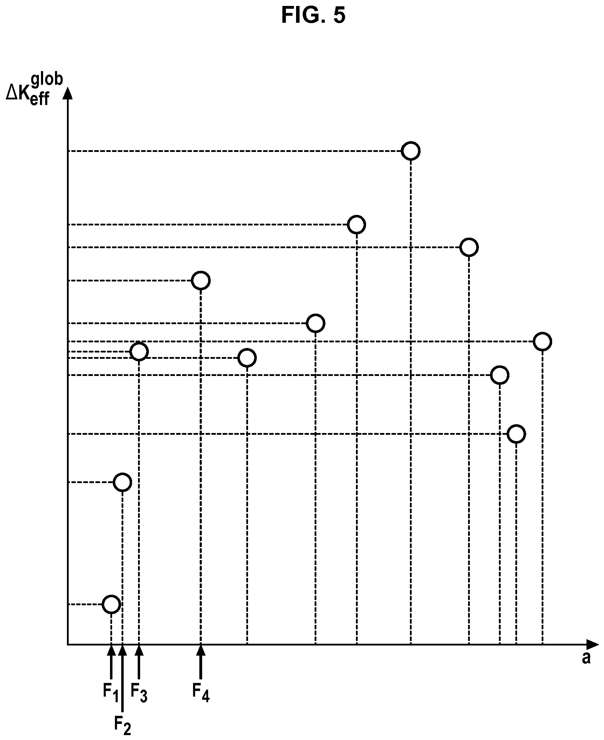

La **figure 5** illustre dans le plan la représentation des couples (a, $\Delta\mathrm{K}_{eff}^{glob}$ ). Les références F1, F2, F3, F4 sont données en référence à la **figure 1,** pour signifier à quel front de la fissure d'origine correspondent les points du graphe. Il s'agit d'un abus d'écriture.

On rappelle à présent que le but est de pouvoir déterminer des FIC pour des états de fissure qui n'ont pas été simulés numériquement, c'est-à-dire pour des états qui se produisent strictement entre deux pas successifs.

A cette fin, dans une étape E4, une interpolation des $\Delta K_{eff}^{glob}$ en fonction de la longueur a est effectuée. L'interpolation est effectuée par les moyens de calcul 14 de l'unité de traitement 12.

L'interpolation peut être effectuée selon plusieurs méthodes. On privilégie les interpolations qui ne créent pas d'informations au problème ou qui en ajoute un minimum. Pour cela, une interpolation linéaire par morceaux IL ou une interpolation par minimisation de l'énergie de courbure IMC conviennent. Les deux interpolations peuvent aussi être effectuées, dans la mesure où elles peuvent avoir des applications différentes.

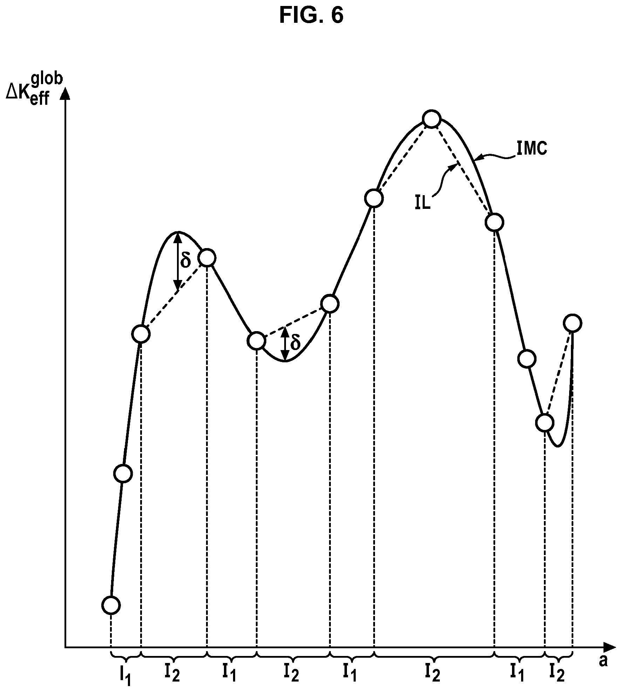

La **figure 6** illustre ces deux interpolations.

L'interpolation par minimisation de l'énergie de courbure globale peut être vue comme une méthode fondée sur des considérations physiques propres au problème de fissuration. En effet, la littérature scientifique sur le sujet montre que si une fissure se propage sans brancher, alors l'évolution du facteur d'intensité des contraintes avec l'extension de fissure peut être représentée par une fonction infiniment dérivable. Cela signifie que le fait de calculer la courbure d'une telle fonction présente un sens.

De plus, minimiser une énergie de courbure intervient dans quelques situations physiques comme, par exemple, dans la physique des bulles de savons ou plus généralement dans la physique des membranes.

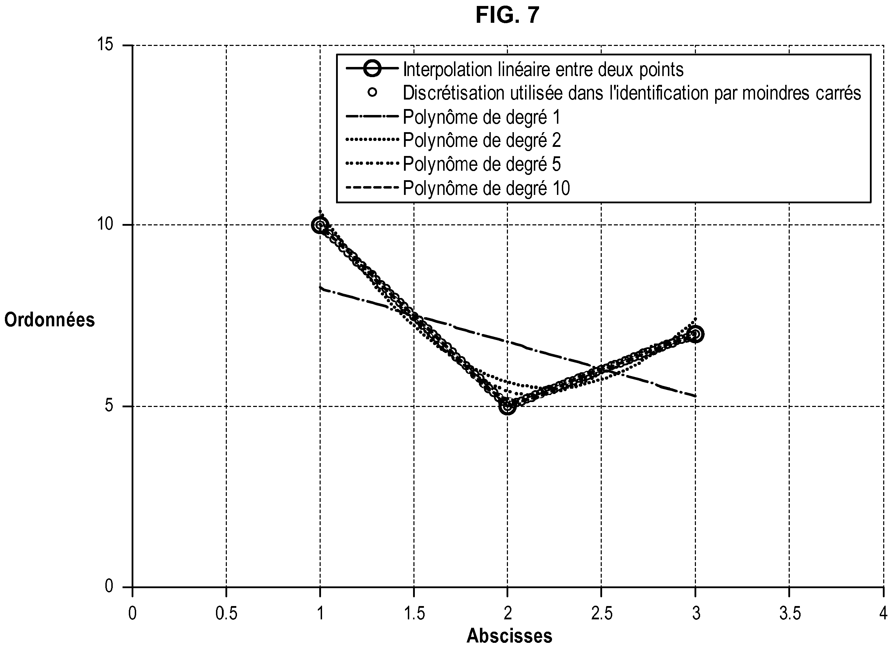

La **figure 7** illustre une interpolation linéaire entre trois points. Cet exemple nous montre qu'il est possible d'approximer de mieux en mieux une interpolation par des polynômes. L'approximation sera d'autant meilleure que le degré du polynôme sera élevé. Il est aussi possible de démontrer que l'écart maximum entre l'interpolation linéaire et l'approximation polynômiale tend vers zéro lorsque le degré du polynôme tend vers l'infini. Ainsi, l'interpolation linéaire peut être vue comme le passage à la limite à l'infini que l'on appliquerait à une fonction infiniment dérivable.

Cette approche confère un caractère aussi « physique » à l'interpolation linéaire par morceaux qu'à l'interpolation fondée sur la minimisation de l'énergie de courbure.

Réaliser une interpolation consiste à compléter l'information manquante à l'aide d'un principe qui doit au minimum respecter la « physique » du problème considéré, c'est-à-dire ne pas introduire d'éléments qui violeraient certaines équations fondamentales auxquelles le problème obéit.

C'est pour cette raison que l'interpolation par minimisation de l'énergie de courbure est une méthode « physique » car elle ne contredit pas la théorie de la mécanique de la rupture. La méthode consistant en des interpolations linéaires par morceaux n'est pas physique au premier abord mais peut être vue comme le passage à la limite d'une méthode d'interpolation polynômiale globale qui, elle, serait physique et qui par extensions rendrait la méthode d'interpolation linéaire par morceaux presque « physique » également.

Un autre point de vue concernant la méthode d'interpolation linéaire serait de la voir comme une méthode de minimisation de la distance entre des points. Cette manière de voir les choses la place alors dans la catégorie des méthodes optimales. L'interpolation linéaire minimise la distance tandis que l'autre minimise l'énergie de courbure sous les contraintes des positions des points à relier. La minimisation des distances peut être vue comme un moyen de relier des points sans introduire d'informations supplémentaires au problème initial et cela résulte en un champ continu. Dans le cas de la seconde méthode, on introduit au moins une information supplémentaire qui est que le champ est régulier. Dans ce cas, la minimisation de l'énergie de courbure est une méthode optimale au sens où on minimise l'information physique à introduire alors que la méthode de l'interpolation linéaire est optimale au sens où on minimise l'information purement mathématique.

Enfin, dans une étape E5, après l'étape d'interpolation, les données interpolées sont stockées, afin de pouvoir y avoir accès pour d'autres applications. Le stockage se fait typiquement dans la mémoire 16. On parle généralement de « formulaire ». Le formulaire est un tableau qui donne les facteurs d'intensité des contraintes en fonction de la longueur de la fissure.

Par conséquent, l'étape d'interpolation E4 génère un fichier, sous forme d'un format texte ou d'un tableau contenant le formulaire, c'est à dire regroupant les données converties et les données converties interpolées. L'étape E5 consiste à stocker ce fichier.

En effet, comme indiqué en introduction, l'obtention du formulaire est généralement utilisée pour calculer la durée de vie d'une pièce. Par conséquent, en référence à la **figure 4,** un procédé 200 de détermination de durée de vie de la pièce à analyser 20 est décrit.

Dans une étape E'1, l'unité de traitement 12 reçoit le formulaire calculé à l'étape E4 et/ou stocké à l'étape E5 du procédé précédent. Cette étape de récupération peut simplement consister à avoir accès à la mémoire 16.

Dans une étape E'2, un procédé de calcul de la durée de vie en propagation de fissure par fatigue de la pièce est mis en œuvre. Le document [8] décrit un tel procédé.

Il suffit d'utiliser un code existant et de remplacer le formulaire de FIC par celui proposé dans cette invention pour déterminer la durée de vie en propagation de fissure.

Ce procédé 200 peut être mis en œuvre par un autre système que celui décrit précédemment.

Raffinement de l'erreur

Lorsque l'on dispose de la totalité des informations concernant le problème à résoudre, le résultat de l'interpolation sera toujours le même quelle que soit la méthode d'interpolation utilisée et qui respecte la totalité des contraintes « physiques » du problème. Typiquement, sur les intervalles I1 de la **figure 6,** l'interpolation apparait intuitivement comme étant de qualité ; sur les intervalles I2, elle apparait intuitivement comme de moins bonne qualité.

Il est ainsi possible de voir les écarts entre deux interpolations optimales dites « physiques et ou mathématiques » comme un moyen d'identifier un manque d'information qui serait utile pour améliorer l'interpolation ou le degré de confiance en l'interpolation.

Cette considération permet de mettre en place une étape de vérification de la pertinence, illustré en **figure 6.**

Dans deux sous-étapes E41 et E42 interchangeables de l'interpolation, on effectue une interpolation linéaire par morceaux et une interpolation par énergie de courbure.

On remarque que strictement entre deux valeurs de longueur correspondant à deux pas successifs simulés, c'est-à-dire strictement en zone interpolée, il existe des différences $\delta$ de valeur $\Delta K_{eff}^{glob}$ entre les deux interpolations.

Dans une sous-étape E43, on calcule au moins une de ces différences $\delta$, que l'on compare, dans une sous-étape E44, à une valeur seuil prédéterminée VSP.

Le seuil prédéterminé VSP est choisi en fonction de la qualité de l'interpolation souhaitée.

Il est aussi possible de comparer une valeur de ces différences pour chaque zone entre deux pas successifs, ou de comparer une moyenne, ou une valeur maximale, etc. On parlera donc plus généralement d'une grandeur $\delta r$ représentative de la différence. Cette grandeur $\delta r$ indique qu'il existe un écart que l'on a pu quantifier par les fonctions citées précédemment.

Enfin, une sous-étape de comparaison E45 entre la grandeur $\delta r$ représentative et le seuil VSP est effectuée.

Si la grandeur représentative 5r est inférieure au seuil VSP, on peut considérer que les deux interpolations sont de qualité et que les données, si elles avaient été simulées, seraient proches des deux valeurs d'interpolation.

Si la grandeur représentative 5r est supérieure au seuil VSP, alors on peut considérer qu'il y a une incertitude trop grande sur l'interpolation, et que l'obtention de nouvelles valeurs simulées est utile, voire nécessaire. A cette fin, on génère une consigne d'instruction de calcul à partir de la simulation numérique, typiquement par éléments finis (ou éléments finis étendus) de la pièce à analyser 20 d'au moins une valeur du facteur d'intensité des contraintes FIC et la position du front de fissure entre les deux pas successifs. En d'autres termes, l'unité de traitement 12 envoie une consigne pour effectuer une partie de l'étape E1, avec un pas réduit pour au moins une simulation.

On parle ainsi de raffinement de la discrétisation en longueur de fissure.

A titre d'exemple, une valeur seuil prédéterminée VSP de 2% peut convenir. Le critère dépend du cahier des charges.

On peut par exemple décider que $\delta r = \delta$ et que dès que

$$\delta r/\max(\Delta K_{eff}^{glob} \ parmi \ interpolation \ linéaire \ et \ courbure) > 2\%$$

pour une valeur de longueur a donnée, une consigne de re-calcul de la simulation est générée.

Enfin, l'étape de stockage E5 peut comprendre le stockage des deux interpolations et des grandeurs représentatives des différences $\delta r$ et/ou des différences $\delta$.

ANNEXE 1 : exemple d'interpolation par minimisation de l'énergie de courbure

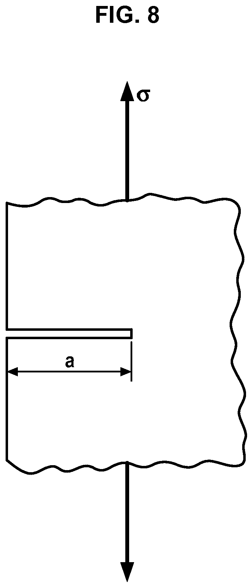

L'interpolation par minimisation de l'énergie de courbure ne donne des prédictions physiques cohérentes que dans le cadre d'une fissure plane à front droit en élasticité plane, telle qu'illustré en **figure 8,** où $\sigma$ représente la contrainte et a la longueur de la fissure. Or, le procédé décrit précédemment permet de considérer thermodynamiquement toute fissure tridimensionnelle comme une fissure vérifiant ces propriétés-là.

Pour effectuer cette interpolation, il faut déterminer l'énergie de courbure.

On définit la fonction f de la manière suivante (x est la longueur de fissure « virtuelle », appelé a auparavant) :

$$\frac{dK_I}{dx} = f(x)$$

La nécessité d'introduire des longueurs de fissure « virtuelles » est explicitée en ANNEXE 2

La fonction f s'écrit comme une combinaison linéaire des fonctions polynômiales par morceau (de degré 5 pour assurer une régularité C2 sur toute la plage d'évolution de la longueur de fissure « virtuelle », il s'agit d'une généralisation des éléments finis classiques) de référence données ci-dessous :

$$
\begin{cases}
C_{1,1}(z) = 0{,}5 - 0.9375.z + 0{,}625.z^3 - 0{,}1875.z^5 \\
C_{1,2}(z) = 2.\,(0{,}3125 - 0.4375.z - 0.375.z^2 + 0{,}625.z^3 + 0{,}0625.z^4 - 0{,}1875.z^5) \\
C_{1,3}(z) = 4.\,(0{,}0625 - 0.0625.z - 0.125.z^2 + 0{,}125.z^3 + 0{,}0625.z^4 - 0{,}0625.z^5) \\
C_{2,1}(z) = 0{,}5 + 0.9375.z - 0{,}625.z^3 + 0{,}1875.z^5 \\
C_{2,2}(z) = 2.\,(-0{,}3125 - 0.4375.z + 0.375.z^2 + 0{,}625.z^3 - 0{,}0625.z^4 - 0{,}1875.z^5) \\
C_{2,3}(z) = 4.\,(0{,}0625 + 0.0625.z - 0.125.z^2 - 0{,}125.z^3 + 0{,}0625.z^4 + 0{,}0625.z^5) \\
z = \dfrac{x - x^{j+1}}{x^{j+1} - x^j} + \dfrac{x - x^j}{x^{j+1} - x^j}
\end{cases}
$$

Le premier indice indique le numéro du nœud sur lequel la valeur nodale est prise.

Le deuxième indice indique la nature de la valeur nodale :

1: Valeur nodale du facteur d'intensité des contraintes (FIC)
2: Valeur nodale de la dérivée par rapport à la variable z du FIC
3: Valeur nodale de la dérivée seconde par rapport à la variable z du FIC

L'élément unidimensionnel associé à ces fonctions de forme est définit de manière à ce que le premier nœud soit situé à z = -1 et le deuxième à z = 1.

L'abscisse curviligne associée à la courbe donnant l'évolution du facteur d'intensité des contraintes en fonctions de la longueur de fissure « virtuelle » est donnée par :

$$
s(x) = \int_{x_1}^{x} \sqrt{\left(1 + \big(f(u)\big)^2\right)}.\,du = \sum_{i=1}^{j-1} \int_{x_i}^{x_{i+1}} \sqrt{\left(1 + \big(f(u)\big)^2\right)}.\,du + \int_{x_j}^{x} \sqrt{\left(1 + \big(f(u)\big)^2\right)}.\,du
$$

On notera :

$$
\begin{cases}
z = \dfrac{x - x^{j+1}}{x^{j+1} - x^j} + \dfrac{x - x^j}{x^{j+1} - x^j} \\
f(x) = f^j(z) = f_{11}^j.C_{1,1}(z) + f_{12}^j.C_{1,2}(z) + f_{13}^j.C_{1,3}(z) + f_{11}^{j+1}.C_{2,1}(z) + f_{12}^{j+1}.C_{2,2}(z) + f_{13}^{j+1}.C_{2,3}(z)
\end{cases}
$$

On notera que les degrés de liberté $f_{11}^j$ et $f_{11}^{j+1} = f_{21}^j$ sont connus. L'optimisation portera sur les autres degrés de liberté.

D'où l'on obtient (où $L_x$ est la longueur de l'élément virtuel) :

$$
s_x(x) = \left( \sum_{i=1}^{j-1} \int_{-1}^{1} \sqrt{\left(1 + \big(f^i(z)\big)^2\right)}.\,dz + \int_{-1}^{z} \sqrt{\left(1 + \big(f^j(z)\big)^2\right)}.\,du \right).\frac{L_x}{2}
$$

Le vecteur unitaire tangent s'obtient comme suit :

$$
t(s_x) = \frac{dK_I}{ds_x}(s_x)
$$

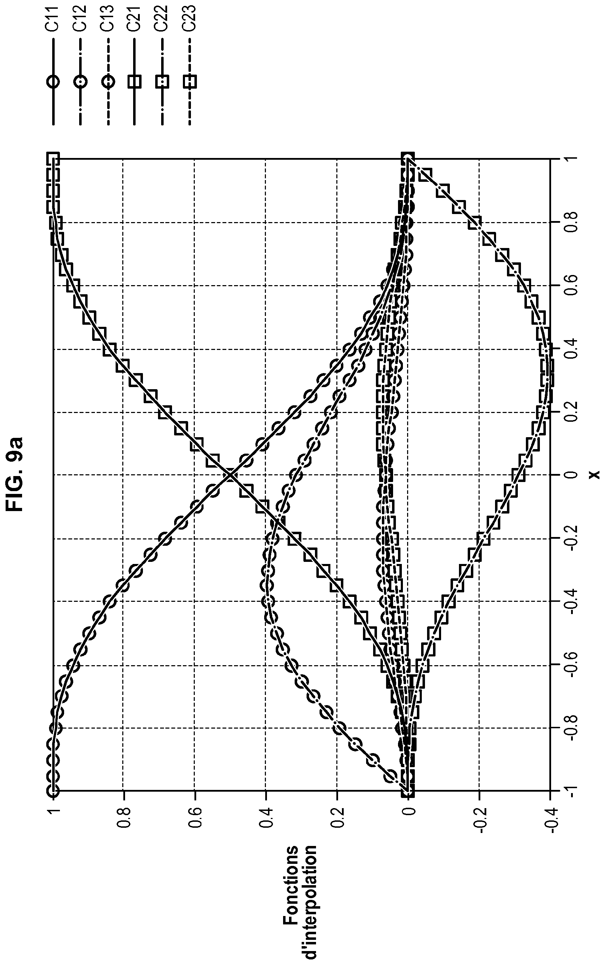

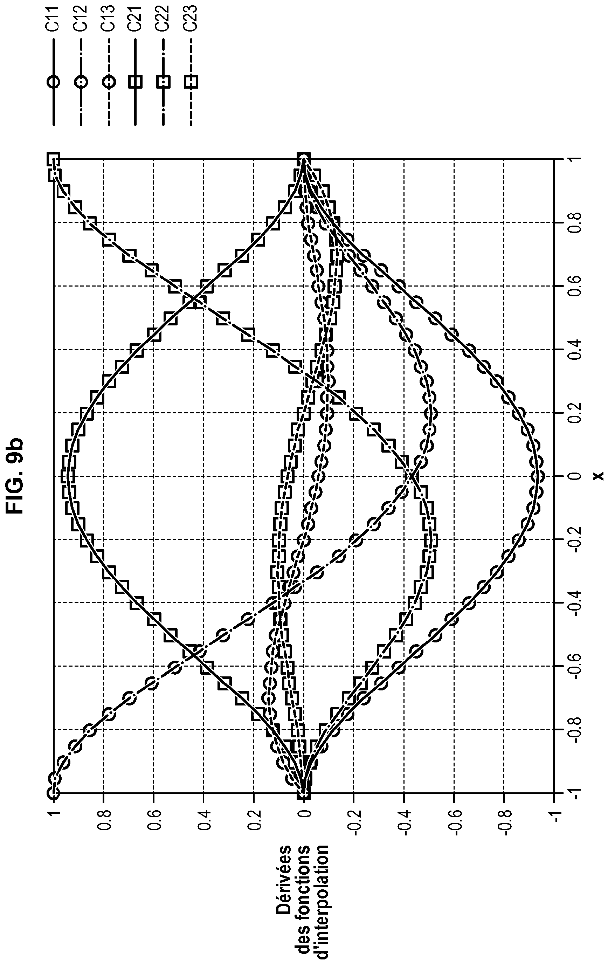

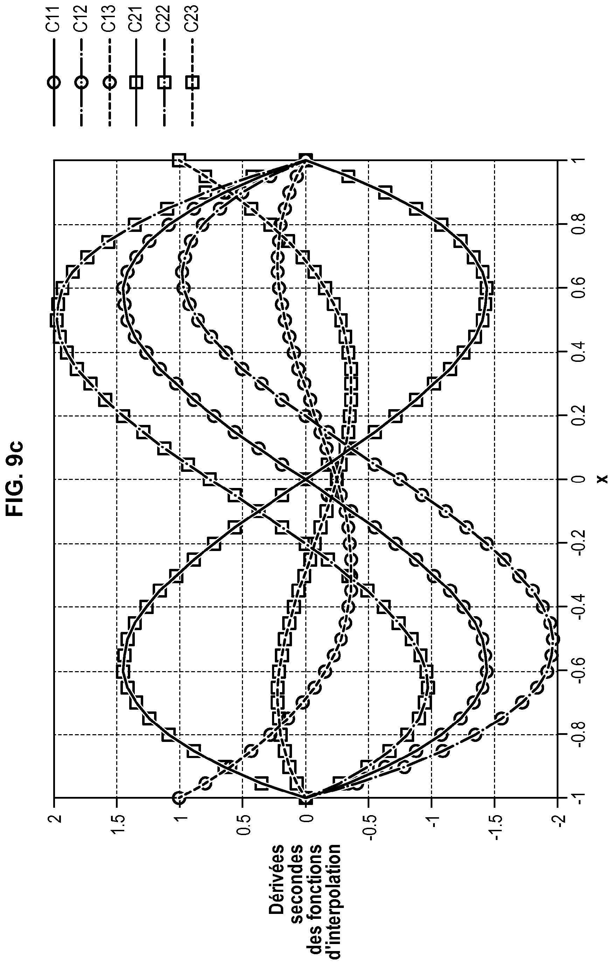

Les **figures 9a à 9c** illustrent les valeurs des fonctions de formes C11, C12, C13, C21, C22 et C23 et leur dérivée et dérivée seconde. On remarque que ces courbes vérifient leurs contraintes spécifiques (0 ou 1) au niveau des nœuds.

Nous pouvons désormais calculer le vecteur unitaire tangent à la courbe $K_I$. Les formules données précédemment conduisent à :

$$t_x = \frac{d\gamma_x}{ds_x} = \frac{d\gamma_x}{dx} \cdot \frac{dx}{ds_x} = \binom{1}{f(x)} \cdot \frac{1}{\frac{ds_x}{dz} \cdot \frac{dz}{dx}} = \binom{1}{f(x)} \cdot \left[ 1 + \left( f^j \left( \frac{x - x^{j+1}}{x^{j+1} - x^j} + \frac{x - x^j}{x^{j+1} - x^j} \right) \right)^2 \right]^{-\frac{1}{2}}$$

Il ne reste plus que le calcul de la courbure. Pour cela, la dérivée de $t_x$ par rapport à l'abscisse curviligne est calculée :

$$\frac{dt_x}{ds_x} = \frac{d}{ds_x} \left( \frac{d\gamma_x}{dx} \cdot \frac{dx}{ds_x} \right) = \frac{d^2\gamma_x}{dx^2} \cdot \left( \frac{dx}{ds_x} \right)^2 + \frac{d\gamma_x}{dx} \cdot \frac{d^2x}{d(s_x)^2} = \binom{0}{f'(x)} \cdot \left( \frac{dx}{ds_x} \right)^2 + \binom{1}{f(x)} \cdot \frac{d^2x}{d(s_x)^2}$$

Pour déterminer les termes en dérivées par rapport à l'abscisse curviligne, les formules de passage différentielles de la coordonnée curviligne à la coordonnée virtuelle sont exprimées :

$$\begin{pmatrix} \dfrac{d}{ds_x} \\ \dfrac{d^2}{d(s_x)^2} \end{pmatrix} = \underbrace{\begin{bmatrix} \dfrac{dx}{ds_x} & 0 \\ \dfrac{d^2x}{d(s_x)^2} & \left( \dfrac{dx}{ds_x} \right)^2 \end{bmatrix}}_{Diff_{s_x}} \cdot \begin{pmatrix} \dfrac{d}{dx} \\ \dfrac{d^2}{dx^2} \end{pmatrix}$$

Cette équation matricielle est inversible ce qui permet d'obtenir :

$$\begin{pmatrix} \dfrac{d}{dx} \\ \dfrac{d^2}{dx^2} \end{pmatrix} = \underbrace{\begin{bmatrix} \dfrac{ds_x}{dx} & 0 \\ \dfrac{d^2s_x}{dx^2} & \left( \dfrac{ds_x}{dx} \right)^2 \end{bmatrix}}_{Diff_x} \cdot \begin{pmatrix} \dfrac{d}{ds_x} \\ \dfrac{d^2}{d(s_x)^2} \end{pmatrix}$$

On remarque que $Diff_x{}^{-1} = Diff_{s_x}$, ce qui permet de déterminer $\left( \dfrac{ds_x}{dx} \right)^2$ et $\dfrac{ds_x}{dx}$ facilement. Finalement, on trouve:

$$\frac{dt_x}{ds_x} = \binom{0}{f'(x)} \cdot Diff_x{}^{-1}(2,2) + \binom{1}{f(x)} \cdot Diff_x{}^{-1}(2,1)$$

Avec :

$$Diff_x = \begin{bmatrix} \dfrac{ds_x}{dx} & 0 \\ \dfrac{d^2s_x}{dx^2} & \left( \dfrac{ds_x}{dx} \right)^2 \end{bmatrix}$$

La courbure s'en déduit automatiquement :

$$\kappa(x) = \sqrt{\left(\text{Diff}_x{}^{-1}(2,1)\right)^2 + \left(f'(x).\text{Diff}_x{}^{-1}(2,2) + f(x).\text{Diff}_x{}^{-1}(2,1)\right)^2}$$

La matrice $\text{Diff}_x{}^{-1}$ doit désormais être explicitée. Pour cela, la formule classique suivante d'inversion de matrice 2x2 est utilisée:

$$A = \begin{pmatrix} a & b \\ c & d \end{pmatrix} \Rightarrow A^{-1} = \frac{1}{\det(A)} \cdot \begin{pmatrix} d & -b \\ -c & a \end{pmatrix} \text{ avec } \det(A) = a.d - b.c$$

On a donc :

$$\begin{cases} z = \dfrac{x - x^{j+1}}{x^{j+1} - x^j} + \dfrac{x - x^j}{x^{j+1} - x^j} \\[2mm] \det(\text{Diff}_x) = \left(\dfrac{ds_x}{dx}\right)^3 = \left[1 + \left(f^j(z)\right)^2\right]^3 \\[2mm] \text{Diff}_x{}^{-1}(x) = \dfrac{1}{\det(\text{Diff}_x)} \cdot \begin{bmatrix} \left[1 + \left(f^j(z)\right)^2\right]^2 & 0 \\[2mm] -\dfrac{4}{L_x} \cdot f^j(z) \cdot \dfrac{df^j}{dz}(z) & 1 + \left(f^j(z)\right)^2 \end{bmatrix} \end{cases}$$

La fonctionnelle que l'on cherche à minimiser est la suivante (si le maillage est constitué de n-1 élément) :

$$W_x = \int_{x_1}^{x_n} \sqrt{\left(1 + \left(f(u)\right)^2\right) \cdot \left(\kappa(u)\right)^2} \cdot du$$

On utilise préférablement alors un algorithme de Newton pour déterminer les paramètres $f_{ij}^k$ qui minimisent cette fonctionnelle. Il est ainsi nécessaire de connaître les vecteurs gradients et matrices Hessiennes (par rapport aux variables inconnues) des grandeurs intervenant dans le problème d'optimisation.

$$
\operatorname{Grad}(\kappa(u)^2)_i =
\begin{bmatrix}
2.\left(\operatorname{Diff_x}^{-1}(2,1)\right).\operatorname{Grad}\left(\operatorname{Diff_x}^{-1}(2,1)\right)_i \\[4pt]
+2.\left(f'(x).\operatorname{Diff_x}^{-1}(2,2)+f(x).\operatorname{Diff_x}^{-1}(2,1)\right) \\[6pt]
.\begin{pmatrix}
\operatorname{Grad}\left(f'(x)\right)_i.\operatorname{Diff_x}^{-1}(2,2)+f'(x).\operatorname{Grad}\left(\operatorname{Diff_x}^{-1}(2,2)\right)_i \\[4pt]
+\operatorname{Grad}\left(f(x)\right)_i.\operatorname{Diff_x}^{-1}(2,1)+f(x).\operatorname{Grad}\left(\operatorname{Diff_x}^{-1}(2,1)\right)_i
\end{pmatrix}
\end{bmatrix}
$$

$$
H(\kappa(u)^2)_i =
\begin{bmatrix}
2.\operatorname{Grad}\left(\operatorname{Diff_x}^{-1}(2,1)\right)_j.\operatorname{Grad}\left(\operatorname{Diff_x}^{-1}(2,1)\right)_i \\[4pt]
+2.\left(\operatorname{Diff_x}^{-1}(2,1)\right).H\left(\operatorname{Diff_x}^{-1}(2,1)\right)_{ij} \\[6pt]
+2.\begin{pmatrix}
\operatorname{Grad}\left(f'(x)\right)_j.\operatorname{Diff_x}^{-1}(2,2)+f'(x).\operatorname{Grad}\left(\operatorname{Diff_x}^{-1}(2,2)\right)_j \\[4pt]
\operatorname{Grad}\left(f(x)\right)_j.\operatorname{Diff_x}^{-1}(2,1)+f(x).\operatorname{Grad}\left(\operatorname{Diff_x}^{-1}(2,1)\right)_j
\end{pmatrix} \\[8pt]
.\begin{pmatrix}
\operatorname{Grad}\left(f'(x)\right)_i.\operatorname{Diff_x}^{-1}(2,2)+f'(x).\operatorname{Grad}\left(\operatorname{Diff_x}^{-1}(2,2)\right)_i \\[4pt]
+\operatorname{Grad}\left(f(x)\right)_i.\operatorname{Diff_x}^{-1}(2,1)+f(x).\operatorname{Grad}\left(\operatorname{Diff_x}^{-1}(2,1)\right)_i
\end{pmatrix} \\[6pt]
+2.\left(f'(x).\operatorname{Diff_x}^{-1}(2,2)+f(x).\operatorname{Diff_x}^{-1}(2,1)\right) \\[8pt]
.\begin{pmatrix}
H\left(f'(x)\right)_{ij}.\operatorname{Diff_x}^{-1}(2,2)+\operatorname{Grad}\left(f'(x)\right)_i.\operatorname{Grad}\left(\operatorname{Diff_x}^{-1}(2,2)\right)_j \\[4pt]
+\operatorname{Grad}\left(f'(x)\right)_j.\operatorname{Grad}\left(\operatorname{Diff_x}^{-1}(2,2)\right)_i+f'(x).H\left(\operatorname{Diff_x}^{-1}(2,2)\right)_{ij} \\[6pt]
H\left(f(x)\right)_{ij}.\operatorname{Diff_x}^{-1}(2,1)+\operatorname{Grad}\left(f(x)\right)_i.\operatorname{Grad}\left(\operatorname{Diff_x}^{-1}(2,1)\right)_j \\[4pt]
+\operatorname{Grad}\left(f(x)\right)_j.\operatorname{Grad}\left(\operatorname{Diff_x}^{-1}(2,1)\right)_i+f(x).H\left(\operatorname{Diff_x}^{-1}(2,1)\right)_{ij}
\end{pmatrix}
\end{bmatrix}
$$

$$
\operatorname{Grad}(W_x)_i =
\begin{pmatrix}
\displaystyle\int_{x_1}^{x_n}\left(1+\left(f(u)\right)^2\right)^{-\frac{1}{2}}.\operatorname{Grad}(f(u))_i.\left(\kappa(u)\right)^2.du \\[10pt]
+2.\displaystyle\int_{x_1}^{x_n}\sqrt{\left(1+\left(f(u)\right)^2\right)}.\operatorname{Grad}(\kappa(u)^2)_i.du
\end{pmatrix}
$$

$$
H(W_x)_{ij} =
\begin{pmatrix}
-\displaystyle\int_{x_1}^{x_n}\left(1+\left(f(u)\right)^2\right)^{-\frac{3}{2}}.\operatorname{Grad}(f(u))_j.\operatorname{Grad}(f(u))_i.\left(\kappa(u)\right)^2.du \\[10pt]
+\displaystyle\int_{x_1}^{x_n}\left(1+\left(f(u)\right)^2\right)^{-\frac{1}{2}}.H(f(u))_{ij}.\left(\kappa(u)\right)^2.du \\[10pt]
+\displaystyle\int_{x_1}^{x_n}\sqrt{\left(1+\left(f(u)\right)^2\right)}.H(\kappa(u)^2)_{ij}.du
\end{pmatrix}
$$

Cet algorithme peut être mis en œuvre par l'unité de traitement 12.

ANNEXE 2: Méthode des métriques variables

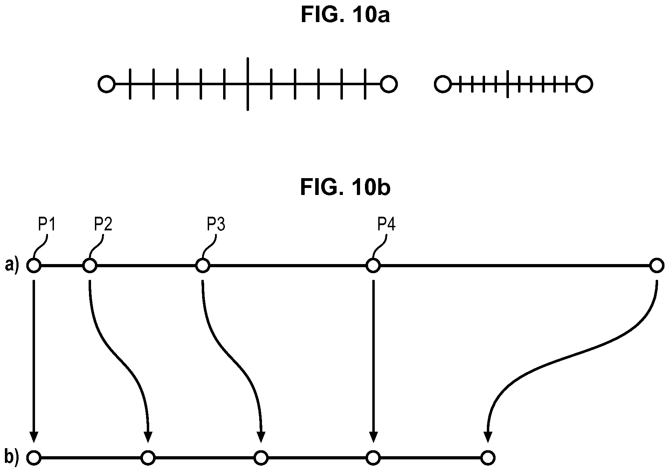

La **figure 10a** illustre les points du front à différents pas de propagation. On remarque que la distance entre deux mêmes points du front n'est pas constante entre deux pas, ce qui signifie que l'échelle de longueur associée à chaque élément est différente. On parle alors de métriques différentes.

Le fait d'avoir des éléments avec des métriques différentes (discontinue donc au point d'intersection) tout en imposant un raccord de régularité C2 entre les éléments conduit à des instabilités numériques.

Un autre point de vue consiste à dire que les éléments n'ont pas les mêmes contributions à la fonctionnelle (du fait de leurs dimensions différentes) alors qu'ils véhiculent tous la même quantité d'information. Quel que soit le point de vu, cela peut induire un biais numérique qu'il faut avantageusement traiter.

Pour résoudre ce problème, il suffit de se placer dans un espace de représentation virtuel dans lequel les éléments d'interpolation ont tous les mêmes dimensions. Par exemple, si les longueurs de fissure discrétisées sont $x$ $\in \{0,1; 0,2; 0,4; 0,6; 0,8\}$, on prendra $x_{virtuel} \in \{1; 2; 3; 4; 5; 6; 7; 8; 9; 10; 11\}$.

Pour passer de la représentation virtuelle à la représentation réelle, on utilise une bijection entre les deux repères (voir **figure 10b).**

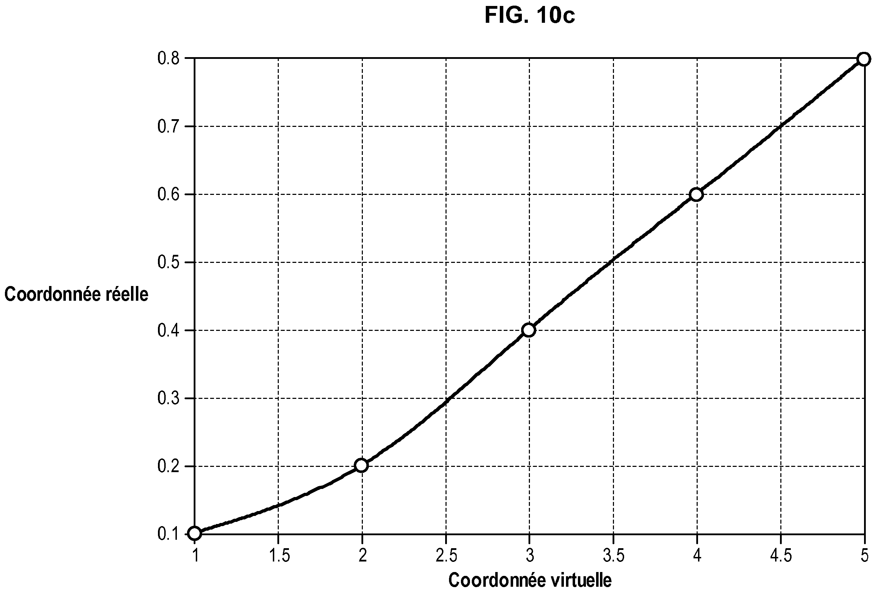

On utilise les mêmes fonctions d'interpolation que précédemment. La correspondance entre les deux espaces de représentation se fait en imposant les degrés de liberté $f_{11}^{j}$ et $f_{11}^{j+1} = f_{21}^{j}$ à chaque nœud. Puis, pour avoir une métrique qui évolue de manière « douce » entre chaque élément, le procédé présenté précédemment est mis en œuvre. Cela permet d'obtenir une correspondance lisse entre les deux espaces de représentation comme représenté sur la **figure 10c.**

Références :

[1] Bueckner HGZ (1970), "A novel principle for the computation of stress intensity factors", Angew, Math. Mech , Vol. 50, p. 529-546.

[2] Rice J.R. (1972), "Some remarks on elastic crack-tip stress fields", Int. J. Solids and Structures, 8, 751-758.

[3] Rice J.R. (1989), "Weight function theory for three-dimensional elastic crack analysis", Fracture Mechanics : Perspectives and Directions (Twentieth Symposium), ASTM STP 1020, R.P. Wei and R.P. Gangloff, Eds., American Society for Testing and Materials, Philadelphia, pp. 29-57.

[4] Lazarus V. (1997), "Quelques problèmes tridimensionnels de la mécanique de la rupture fragile", Thèse Université Paris 6.

[5] X.B. Lina, R.A. Smith, "Finite element modelling of fatigue crack growth of surface cracked plates Part III: Stress intensity factor and fatigue crack growth life", ENGINEERING FRACTURE MECHANICS, vol. 63, no. 5, pages 541-556, 1999.

[6] W. Elber. "The significance of fatigue crack closure". ASTM STP, 486 : 230-242, 1971.

[7] PC. Paris, F. Erdogan, 1963, "A critical analysis of crack propagation laws". J Basic Eng 85, pp 528-534.

[8] « Nasgro - Fracture Mechanics and Fatigue Crack Growth Analysis Software - Reference Manual», Version 6.2, 2011.

**Revendications**

**1.** Procédé d'estimation (100) du facteur d'intensité des contraintes dans une pièce modélisée numériquement, dans le cadre d'une modélisation de propagation de fissure par fatigue, mis en œuvre par un système (10) comprenant une unité de traitement de données (12), le procédé d'estimation (100) comprenant les étapes suivantes :

- (E2) : obtention, à partir d'une modélisation numérique de la pièce à analyser (20), d'une pluralité de valeurs simulées en différents points de la pièce à analyser (20),
ladite pluralité de valeurs simulées comprenant, pour différents pas de propagation simulés d'une fissure tridimensionnelle qui apparait sur la modélisation numérique de la pièce, un ensemble des valeurs simulées du facteur d'intensité des contraintes en des points associés, la position de ces points, et des données relatives à la surface fissurée de la fissure,
- (E3) : détermination, pour chaque pas de propagation et pour l'ensemble de valeurs simulées pour celui-ci, d'une part d'une valeur convertie d'amplitude du facteur d'intensité des contraintes efficace global équivalent correspondant à celui d'une fissure plane à front droit et d'autre part d'une longueur convertie de la fissure équivalente considérée, lesdites valeurs converties étant déterminées par égalisation de l'énergie dissipée dans la fissure tridimensionnelle de la modélisation numérique et de l'énergie dissipée dans la fissure d'un modèle standard de fissure plane à front droit, les énergies étant elles-mêmes déterminées en fonction des facteurs d'intensité des contraintes,

- (E4) : Interpolation de valeurs converties d'amplitude de facteur d'intensité des contraintes efficace global équivalent entre deux longueurs de fissure converties successives,

- (E5) : Stockage des valeurs converties d'amplitude de facteur d'intensité des contraintes efficace global équivalent ainsi interpolées avec les longueurs de fissure associées.

2. Procédé d'estimation selon la revendication 1, dans lequel l'étape d'interpolation (E4) met en œuvre une interpolation linéaire par morceaux.

3. Procédé d'estimation selon la revendication 1, dans lequel l'étape d'interpolation (E4) met en œuvre une interpolation par minimisation de l'énergie de courbure.

4. Procédé d'estimation selon la revendication 1, dans lequel l'étape d'interpolation (E4) comprend les sous-étapes suivantes :

- (E41) interpolation à l'aide d'une interpolation linéaire,
- (E42) interpolation à l'aide d'une interpolation par minimisation de l'énergie de courbure, les deux interpolations étant interchangeables,
- (E43) calcul d'au moins une grandeur représentative d'une différence de valeurs d'amplitude du facteur d'intensité des contraintes efficace global équivalent entre les deux interpolations, ladite différence étant calculée strictement entre deux valeurs de longueurs de la fissure correspondant à deux pas successifs,
- (E44) comparaison de ladite grandeur représentative de la différence avec un seuil prédéterminée,
- (E45) si la grandeur représentative de la différence est supérieure au seuil, génération d'une consigne d'instruction de calcul à partir de la simulation numérique de la pièce à analyser (10) des valeurs du facteur d'intensité des contraintes et des valeurs de la position de la fissure, entre les deux pas successifs.

5. Procédé d'estimation selon l'une quelconque des revendications précédentes, comprenant, préalablement à l'étape d'obtention (E2), une étape de calcul (E1) mettant en œuvre la simulation par éléments finis à des pas successifs de l'évolution de la fissure dans la pièce à analyser (10), ladite simulation étant effectuée par l'unité de traitement (12).

6. Procédé d'estimation selon l'une quelconque des revendications précédentes, dans lequel les données numériques récupérées à l'étape d'obtention (E2) des données sont obtenues par une simulation par éléments finis ou éléments finis étendus.

7. Procédé d'estimation selon l'une quelconque des revendications précédentes, dans lequel, pour l'étape de détermination (E3),

un premier sous-ensemble de données permet de connaitre l'amplitude efficace du taux de restitution d'énergie $\Delta G$ par les relations suivantes et leur équivalence en matière d'amplitude :

$$G = \frac{1}{E^*}\left(K_I^2 + K_{II}^2\right) + \frac{1}{\mu}\, K_{III}^2$$

$E^* = E$ en contraintes planes
$E^* = E/(1 - v^2)$ en déformations planes

$$\left(\Delta K_{eff}(s)\right)^2 = \Delta G_{eff}(s).\, E^*$$

Où $K_I$, $K_{II}$ et $K_{III}$ sont, respectivement, les coefficient de facteur d'intensité des contraints FIC correspondant aux modes d'ouverture de la fissure, de cisaillement dans le plan et de cisaillement anti-plan, $\Delta K_{eff}(s)$ est l'amplitude du facteur d'intensité des contraintes efficace, $\Delta G_{eff}$ est l'amplitude du taux de restitution d'énergie efficace, s est l'abscisse curviligne le long du front de fissure, E est le module de Young, $E^*$ est le module de Young équivalent, $\mu$ est le module de cisaillement, v est le coefficient de Poisson,

un deuxième sous-ensemble de données permet de connaitre l'incrément de surface fissuré dSurf,

ces formulations permettent d'obtenir la valeur de l'énergie dissipée :

$$Energie\ dissipée = \int_{front\ de\ fissure} \Delta G_{eff}(s)\,.\,dSurf(s)\,.\,dl$$

dans lequel cette énergie dissipée est égalisée avec l'énergie dissipée de la fissure d'un modèle standard de fissure plane à front droit, s'exprimant sous la forme :

$$Energie\ dissipée^{glob} = \Delta G_{eff}^{glob}\,.\,dSurf^{glob}\,.\,L_{front}$$

Où la notation glob est relative à ce modèle standard, et $L_{front}$ est la longueur du front de fissure,
dans lequel, grâce à une modélisation par une loi de Paris avec les paramètres de fermeture de fissure d'Elber,
le lien entre dSurf^{glob} et $\Delta G_{eff}^{glob}$ est effectué

$$\frac{dSurf^{glob}}{dN} = C.\left(\sqrt{\Delta G_{eff}^{glob}.E^*}\right)^{n}$$

où C et n sont des coefficients de Paris,
dans lequel, en égalisant les deux énergies dissipées, on obtient

$$\Delta G_{eff}^{glob} = \left(\frac{\int_{front\ de\ fissure}\Delta G_{eff}(s)\,.\,dSurf(s)\,.\,dl}{C.(E^*)^n L_{front}}\right)^{\frac{1}{n+1}} = \left(\frac{Energie\ dissipée}{C.(E^*)^n L_{front}}\right)^{\frac{1}{n+1}}$$

dans lequel, au moyen des relations entre ΔGeff et ΔKeff, on détermine $\Delta K_{eff}^{glob}$ et dans lequel on détermine Surf^{glob}, c'est-à-dire la longueur convertie de la fissure équivalente,
dans lequel le premier sous-ensemble de données contient les valeurs du facteur d'intensité des contraintes en des points associés sur le front de fissure et leur position respective associée, et le deuxième sous-ensemble de données contient les données relatives à la surface fissurée.

**8.** Procédé comprenant un procédé d'estimation selon quelconque des revendications 1 à 7 et un procédé d'évaluation (200) de la durée de vie d'une pièce (20) modélisée numériquement, dans lequel on met en œuvre un calcul de la durée de vie de la pièce (20) faisant intervenir les valeurs converties d'amplitude de facteur d'intensité des contraintes efficace interpolées selon le procédé d'estimation.

**9.** Système comprenant une unité de traitement (12) comprenant des moyens de calcul (14) et une mémoire (16), l'unité étant configurée pour mettre en œuvre un procédé d'estimation selon l'une quelconque des revendications 1 à 7, ou un procédé selon la revendication 8.

**10.** Produit programme d'ordinateur configuré pour être mis en œuvre par un système selon la revendication 9, et comprenant des instructions pour provoquer la mise en œuvre d'un procédé d'estimation selon l'une quelconque des revendications 1 à 7, ou un procédé selon la revendication 8.

**Patentansprüche**

**1.** Verfahren zur Schätzung (100) des Stressintensitätsfaktors in einem digital modellierten Teil im Rahmen einer Modellierung einer Rissausbreitung durch Ermüdung, durchgeführt durch ein System (10), umfassend eine Datenverarbeitungseinheit (12), wobei das Schätzverfahren (100) die folgenden Schritte umfasst:

- (E2): Erhalten, auf der Basis einer digitalen Modellierung des zu analysierenden Teils (20), einer Vielzahl simulierter Werte an verschiedenen Punkten des zu analysierenden Teils (20),

wobei die Vielzahl simulierter Werte für verschiedene simulierte Ausbreitungsschritte eines dreidimensionalen Risses, der auf der digitalen Modellierung des Teils erscheint, eine Menge der simulierten Werte des Stressintensitätsfaktors an zugeordneten Punkten, die Position dieser Punkte und Daten umfasst, die sich auf die Rissoberfläche des Risses beziehen,

- (E3): Bestimmen, für jeden Ausbreitungsschritt und für die Menge simulierter Werte für diesen, zum einen eines konvertierten Amplitudenwerts des äquivalenten globalen effektiven Stressintensitätsfaktors, der dem eines ebenen Risses mit gerader Front entspricht, und zum anderen einer konvertierten Länge des betrachteten äquivalenten Risses, wobei die konvertierten Werte durch Ausgleich der in dem dreidimensionalen Riss der digitalen Modellierung dissipierten Energie und der im Riss eines Standardmodells eines ebenen Risses mit gerade Front dissipierten Energie bestimmt werden, wobei die Energien selbst in Abhängigkeit von den Stressintensitätsfaktoren bestimmt werden,

- (E4): Interpolieren von konvertierten Amplitudenwerten des äquivalenten globalen effektiven Stressintensitätsfaktors zwischen zwei aufeinanderfolgenden konvertierten Risslängen,

- (E5): Speichern der derart interpolierten konvertierten Amplitudenwerte des äquivalenten globalen effektiven Stressintensitätsfaktors mit den zugeordneten Risslängen.

2. Schätzverfahren nach Anspruch 1, wobei bei dem Interpolationsschritt (E4) eine stückweise lineare Interpolation durchgeführt wird.

3. Schätzverfahren nach Anspruch 1, wobei bei dem Interpolationsschritt (E4) eine Interpolation durch Minimierung der Krümmungsenergie durchgeführt wird.

4. Schätzverfahren nach Anspruch 1, wobei der Interpolationsschritt (E4) die folgenden Unterschritte umfasst:

- (E41) Interpolieren mit Hilfe einer linearen Interpolation,
- (E42) Interpolieren mit Hilfe einer Interpolation durch Minimierung der Krümmungsenergie, wobei die zwei Interpolationen austauschbar sind,
- (E43) Berechnen von mindestens einer Größe, die für eine Differenz von Amplitudenwerten des äquivalenten globalen effektiven Stressintensitätsfaktors zwischen zwei Interpolationen repräsentativ ist, wobei die Differenz strikt zwischen zwei Längenwerten des Risses entsprechend zwei aufeinanderfolgenden Schritten berechnet wird,
- (E44) Vergleichen der repräsentativen Größe der Differenz mit einem vorher festgelegten Grenzwert,
- (E45) wenn die repräsentative Größe der Differenz höher als der Grenzwert ist, Erzeugen einer Anweisung zur Berechnung, auf der Basis der digitalen Simulation des zu analysierenden Teils (10), der Werte des Stressintensitätsfaktors und der Werte der Position des Risses zwischen zwei aufeinanderfolgenden Schritten.

5. Schätzverfahren nach einem der vorangehenden Ansprüche, umfassend, vor dem Schritt des Erhaltens (E2), einen Berechnungsschritt (E1), bei dem die Simulation durch finite Elemente in aufeinanderfolgenden Schritten der Entwicklung des Risses in dem zu analysierenden Teil (10) durchgeführt wird, wobei die Simulation durch die Verarbeitungseinheit (12) durchgeführt wird.

6. Schätzverfahren nach einem der vorangehenden Ansprüche, wobei die beim Schritt des Erhaltens (E2) der Daten zurückgewonnenen digitalen Daten durch eine Simulation durch finite Elemente oder erweiterte finite Elemente erhalten werden.

7. Schätzverfahren nach einem der vorangehenden Ansprüche, wobei, für den Bestimmungsschritt (E3),

eine erste Daten-Untermenge erlaubt, die effiziente Amplitude des Energierestitutionsgrads ΔG durch die folgenden Gleichungen und ihre Äquivalenz im auf dem Amplitudengebiet zu ermitteln:

$$G = \frac{1}{E^*}(K_I^2 + K_{II}^2) + \frac{1}{\mu}K_{III}^2$$

$E^* = E$ in ebenen Stresszuständen
$E^* = E/(1\text{-}v^2)$ in ebenen Deformationen

$$\left(\Delta K_{eff}(s)\right)^2 = \Delta K_{eff}(s).E^*$$

wobei $K_I$, $K_{II}$ und $K_{III}$ jeweils die Koeffizienten des Stressintensitätsfaktors FIC sind, die dem Modus der Rissöffnung, der Scherung in der Ebene und der Scherung in der Gegenebene entsprechen,
$\Delta K_{eff}(s)$ die Amplitude des effektiven Stressintensitätsfaktors ist,
$\Delta G_{eff}$ die Amplitude des effizienten Energierestitutionsgrads ist, s die krummlinige Abszisse entlang der Rissfront ist, E das Young-Modul ist, E* das äquivalente Young-Modul ist, $\mu$ das Schermodul ist, v der Poisson-Koeffizient ist,
eine zweite Untermenge die Kenntnis des Inkrements einer gerissenen Oberfläche dSurf erlaubt,
wobei diese Formeln erlauben, den Wert der dissipierten Energie zu erhalten:

$$dissipierte\ Energie = \int_{Rissfront} \Delta G_{eff}(s).dSurf(s).dl$$

wobei diese dissipierte Energie mit der dissipierten Energie des Risses eines Standardmodells eines ebenen Risses mit gerader Front abgeglichen wird, folgendermaßen ausgedrückt:

$$dissipierte\ Energie^{glob} = \Delta G_{eff}^{glob}.dSurf^{glob}.L_{Front}$$

wobei sich die Notierung glob auf dieses Standardmodell bezieht und $L_{Front}$ die Länge der Rissfront ist,
wobei, dank einer Modellierung durch ein Paris-Gesetz mit den Elber-Rissschlussparametern, die Verbindung zwischen $dSurf^{glob}$ und $\Delta G_{eff}^{glob}$ durchgeführt wird

$$\frac{dSurf^{glob}}{dN} = C.\left(\sqrt{\Delta G_{eff}^{glob}.E^*}\right)^n$$

wobei C und n Paris-Koeffizienten sind,
wobei man durch Ausgleich der zwei dissipierten Energien erhält

$$\Delta G_{eff}^{glob} = \left(\frac{\int_{Rissfront} \Delta G_{eff}(s).dSurf(s).dl}{C.(E^*)^n L_{Front}}\right)^{\frac{1}{n+1}} = \left(\frac{dissipierte\ Energie}{C.(E^*)^n L_{Front}}\right)^{\frac{1}{n+1}}$$

wobei mittels der Beziehungen zwischen $\Delta G_{eff}$ und $\Delta K_{eff}$ $\Delta K_{eff}^{glob}$ bestimmt wird und wobei $Surf^{glob}$ bestimmt wird, das heißt, die konvertierte Länge des äquivalenten Risses,
wobei die erste Daten-Untermenge die Werte des Stressintensitätsfaktors an zugeordneten Punkten über die Rissfront und ihre zugeordnete jeweilige Position enthält, und die zweite Daten-Untermenge die Daten enthält, die sich auf die gerissene Oberfläche beziehen.

8. Verfahren, umfassend ein Schätzverfahren nach einen der Ansprüche 1 bis 7 und ein Schätzverfahren (200) der Lebensdauer eines digital modellierten Teils (20), wobei eine Berechnung der Lebensdauer des Teils (20) durchgeführt wird, in das konvertierte, gemäß dem Schätzverfahren interpolierte Werte der Stressintensitätsfaktoramplitude einfließen.

9. System, umfassend eine Verarbeitungseinheit (12), umfassend Rechenmittel (14) und einen Speicher (16), wobei die Einheit ausgelegt ist, um ein Schätzverfahren nach einem der Ansprüche 1 bis 7 oder ein Verfahren nach Anspruch 8 durchzuführen.

10. Rechnerprogrammprodukt, das ausgelegt ist, um von einem System nach Anspruch 9 durchgeführt zu werden und umfassend Befehle für die Durchführung eines Schätzverfahrens nach einem der Ansprüche 1 bis 7 oder eines Verfahrens nach Anspruch 8.

**Claims**

1. A method for estimating (100) the stress intensity factor in a numerically modeled part, within the context of a fatigue crack propagation model, implemented by a system (10) comprising a data processing unit (12), the method for estimating (100) comprising the following steps:

   - (E2) : obtaining from a numerical model of the part to be analyzed (20), a plurality of values simulated at different points of the part to be analyzed (20),
   said plurality of simulated values comprising, for different simulated propagation increments a three-dimensional crack which appears on the numerical model of the part, a set of simulated values of the stress intensity factor at associated points, the position of these points, and data relating to the cracked surface of the crack,
   - (E3): determining, for each propagation increment and for the set of simulated values therefor, a converted amplitude value of the equivalent global effective stress intensity factor corresponding to that of a plane crack with a straight front and a converted length of the equivalent crack considered, said converted values being determined by equalizing the energy dissipated in the three-dimensional crack of the numerical model and the energy dissipated in the crack of a standard model of a plane crack with a straight front, the energies themselves being determined according to the stress intensity factors,
   - (E4): Interpolating converted amplitude values of equivalent global effective stress intensity factor between two successive converted crack lengths,
   - (E5): Storing the converted amplitude values of equivalent global effective stress intensity factor thus interpolated with the associated crack lengths.

2. The method for estimating as claimed in claim 1, wherein the interpolation step (E4) implements a piecewise linear interpolation.

3. The method for estimating as claimed in claim 1, wherein the interpolation step (E4) implements an interpolation by curvature energy minimization.

4. The method for estimating as claimed in claim 1, wherein the interpolation step (E4) comprises the following substeps:

   - (E41) interpolation using a linear interpolation,
   - (E42) interpolation using an interpolation by curvature energy minimization, the two interpolations being interchangeable,
   - (E43) calculation of at least one magnitude representative of a difference in amplitude values of the equivalent global effective stress intensity factor between the two interpolations, said difference being calculated strictly between two values of lengths of the crack corresponding to two successive increments,
   - (E44) comparison of said magnitude representative of the difference with a predetermined threshold,
   - (E45) if the magnitude representative of the difference is above the threshold, generation of an instruction to calculate from the numerical simulation of the part to be analyzed (10) stress intensity factor values and values of the position of the crack, between the two successive increments.

5. The method for estimating as claimed in any one of the preceding claims, comprising, prior to the step of obtaining (E2), a step of calculating (E1) implementing the finite element simulation at successive increments of the evolution of the crack in the part to be analyzed (10), said simulation being performed by the processing unit (12).

6. The method for estimating as claimed in any one of the preceding claims, wherein the numerical data retrieved in the step of obtaining (E2) the data are obtained by a finite element or extended finite element simulation.

7. The method for estimating as claimed in any one of the preceding claims, wherein, for the step of determining (E3),

   a first data subset makes it possible to find the effective amplitude of the energy release rate $\Delta G$ via the following relationships and their equivalence in terms of amplitude:

$$G = \frac{1}{E^*} (K_I^2 + K_{II}^2) + \frac{1}{\mu} K_{III}^2$$

$E^*$ = E in plane stresses
$E^*$ = $E/(1 - v^2)$ in plane strains

$$\left(\Delta K_{eff}(s)\right)^2 = \Delta G_{eff}(s) . E^*$$

Where $K_I$, $K_{II}$ and $K_{III}$ are the stress intensity factor SIF coefficients corresponding to the crack opening, plane shear and anti-plane shear modes, respectively, $\Delta K_{eff}(s)$ is the amplitude of the effective stress intensity factor, $\Delta G_{eff}$ is the amplitude of the effective energy release rate, s is the curvilinear abscissa along the crack front, E is Young's modulus, $E^*$ is the equivalent Young's modulus, $\mu$ is the shear modulus, v is Poisson's ratio,

a second data subset makes it possible to find the cracked surface increment dSurf,
these formulations make it possible to obtain the value of the dissipated energy:

$$Dissipated\ energy = \int_{crack\ front} \Delta G_{eff}(s) . dSurf(s) . dl$$

wherein this dissipated energy is equalized with the dissipated energy of the crack of a standard model of plane crack with a straight front, being expressed in the form:

$$Dissipated\ energy^{glob} = \Delta G_{eff}^{glob} . dSurf^{glob} . L_{front}$$

Where the notation glob relates to this standard model, and $L_{front}$ is the length of the crack front,
wherein, thanks to modeling using a Paris law with the Elber crack closure parameters, the link is made between dSurf$^{glob}$ and $\Delta G_{eff}^{glob}$

$$\frac{dSurf^{glob}}{dN} = C. \left(\sqrt{\Delta G_{eff}^{glob} . E^*}\right)^n$$

where C and n are Paris coefficients,
wherein, by equalizing the two dissipated energies, the following is obtained

$$\Delta G_{eff}^{glob} = \left(\frac{\int_{crack\ front} \Delta G_{eff}(s) . dSurf(s) . dl}{C. (E^*)^n L_{front}}\right)^{\frac{1}{n+1}} = \left(\frac{Dissipated\ energy}{C. (E^*)^n L_{front}}\right)^{\frac{1}{n+1}}$$

wherein, by means of the relationships between $\Delta G_{eff}$ and $\Delta K_{eff}$, $\Delta K_{eff}^{glob}$ is determined and wherein Surf$^{glob}$ is determined, i.e. the converted length of the equivalent crack, wherein the first data subset contains the stress intensity factor values at associated points on the crack front and their respective associated position, and the second data subset contains the data relating to the cracked surface.

8. A method comprising a method for estimating according to any of the claims 1 to 7, for evaluating (200) the service life of a numerically modeled part (20), wherein a calculation is implemented of the service life of the part (20) involving the converted amplitude values of effective stress intensity factor interpolated according to the method for estimating.

9. A system comprising a processing unit (12) comprising calculation means (14) and a memory (16), the unit being configured for implementing a method for estimating according to one any of claims 1 to 7, or a method for evaluating service life as claimed in claim 8.

10. A computer program product configured for being implemented by a system as claimed in claim 9, and comprising instructions for bringing about the implementation of a method for estimating as claimed in any one of claims 1 to 7, or a method as claimed in claim 8.

# FIG. 1

# FIG. 2

# FIG. 3

# FIG. 4

## FIG. 5

# FIG. 6

FIG. 7

EP 3 472 736 B1

# FIG. 8

FIG. 9a

EP 3 472 736 B1

FIG. 9b

EP 3 472 736 B1

**FIG. 9c**

EP 3 472 736 B1

# FIG. 10a

# FIG. 10b

# FIG. 10c

EP 3 472 736 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **BUECKNER HGZ.** A novel principle for the computation of stress intensity factors. *Angew, Math. Mech,* 1970, vol. 50, 529-546
- **RICE J.R.** Some remarks on elastic crack-tip stress fields. *Int. J. Solids and Structures,* 1972, vol. 8, 751-758
- Weight function theory for three-dimensional elastic crack analysis. **RICE J.R.** Fracture Mechanics : Perspectives and Directions (Twentieth Symposium), ASTM STP 1020. American Society for Testing and Materials, 1989, 29-57
- **LAZARUS V.** Quelques problèmes tridimensionnels de la mécanique de la rupture fragile. Thèse Université Paris 6, 1997
- **X.B. LINA ; R.A. SMITH.** Finite element modelling of fatigue crack growth of surface cracked plates Part III: Stress intensity factor and fatigue crack growth life. *ENGINEERING FRACTURE MECHANICS,* 1999, vol. 63 (5), 541-556
- **W. ELBER.** The significance of fatigue crack closure. *ASTM STP,* 1971, vol. 486, 230-242
- **PC. PARIS ; F. ERDOGAN.** A critical analysis of crack propagation laws. *J Basic Eng,* 1963, vol. 85, 528-534
- Nasgro - Fracture Mechanics and Fatigue Crack Growth Analysis Software - Reference Manual. 2011